(19) Europäisches Patentamt / European Patent Office / Office européen des brevets

(11) **EP 1 916 528 A2**

(12) **EUROPEAN PATENT APPLICATION**

(43) Date of publication:
**30.04.2008 Bulletin 2008/18**

(51) Int Cl.:
**G01P 3/487** (2006.01)  **G01P 3/489** (2006.01)
**H02K 29/08** (2006.01)  **G01D 5/14** (2006.01)

(21) Application number: **07119176.1**

(22) Date of filing: **24.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **25.10.2006 IT TO20060771**

(71) Applicants:
• **Emerson Appliance Motors Europe S.r.l.**
 **10024 Moncalieri (Torino) (IT)**

• **Elmotron S.r.l.**
 **27100 Pavia (IT)**

(72) Inventor: **Acquaviva, Sebastiano**
 **I-10025, PINO TORINESE (Torino) (IT)**

(74) Representative: **Quinterno, Giuseppe et al**
 **Jacobacci & Partners S.p.A.**
 **Corso Emilia, 8**
 **10152 Torino (IT)**

(54) **Device for sensing the angular speed and position of a rotating element**

(57)    The device comprises a rotor (2) of permanent magnetic material rotationally integral with the element and magnetized transversely in a substantially uniform manner. The rotor has at least one pair of magnetic poles of opposite polarity which are equally spaced angularly. The device also comprises at least two magnetic field sensors (3a, 3b) associated to the rotor (2) and arranged substantially in the same angular position; the sensors (3a, 3b) are arranged to supply respective signals or data from which it is inferable the value of the position angle of the rotor (2). The device further comprises electronic processing devices (5) arranged to process in a predetermined manner the signals supplied by the magnetic field sensors (3a, 3b) and to generate signals or data representative of the position and/or angular speed of the rotor (2).

FIG.1

EP 1 916 528 A2

**Description**

The present invention relates to a device for sensing the angular position and/or angular speed of a rotating element.

One object of the present invention is to propose an innovative device for sensing the angular position of a rotating element, which is able to supply signals able to be processed simply so as to provide an estimate as to the angular speed of the said element.

These and other objects are achieved according to the invention by a sensor, whose main characteristic features are defined in Claim 1.

Further characteristic features and advantages of the invention will appear from the below detailed description, provided purely by way of a non-limiting example, with reference to the accompanying drawings in which:

- Figure 1 is a schematic illustration of a sensing device according to the invention;
- Figure 2 is a down view, essentially along the arrow II of figure 1, of a support for the magnetic field sensors of a sensing device according to the invention;
- Figure 3 is a block diagram illustrating operation of the sensing device according to the invention;
- Figure 4 is a block diagram of a variation of operation of the sensing device according to the invention;
- Figure 5 is a block diagram of another variation of operation of the sensing device according to the invention;
- Figure 6 is a block diagram of a further variation of operation of the sensing device according to the invention.

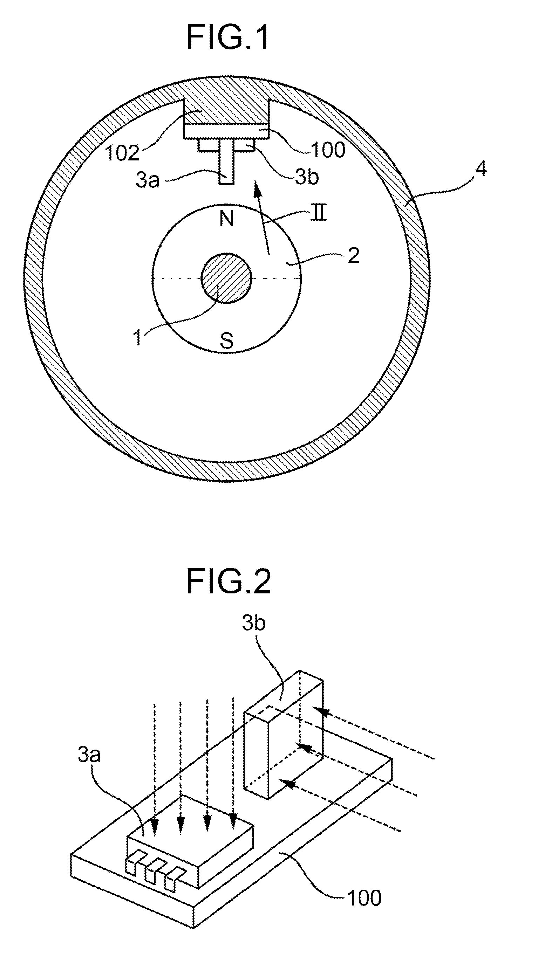

Figure 1 shows a rotating element in which 1 denotes a rotating shaft around which an annular rotor 2 made of permanent magnetic material is present. Said rotor 2 is rotationally integral with said shaft 1 and is magnetized transversely in a substantially uniform manner, i.e. has flow lines which are parallel and all oriented in the same direction. Magnetization of said rotor 2 is obtained owing to the presence of at least one pair of magnetic poles of opposite polarity (denoted N and S in figure 1), which are equally spaced angularly.

At least two magnetic field sensors 3a, 3b, which are arranged substantially in the same angular position, are associated to the rotor 2. In the present description and in the following claims, with the expression "arranged substantially in the same angular position" it is intended that the respective barycentres of the sensors 3a, 3b are placed in an angular field whose extension is preferably between 0° and 10°.

Said sensors 3a, 3b are fixed to a stationary support 100 and they are oriented each other in an orthogonal way, as shown in figure 2.

Said sensors 3a, 3b are able to supply respective signals or data from which, either directly or indirectly, the value of the position angle of the rotor 2 can be deduced, as will now be explained in detail.

Said sensors 3a and 3b are preferably Hall integrated devices whose chips, in the illustrated example, have a substantially parallelepiped shape. Said Hall device 3a, 3b are preferably linear Hall probes, i.e. Hall sensors which are characterized in that, if supplied with a constant current, they are able to develop a voltage linearly dependent on the magnetic field applied to them, in this case the magnetic field of the rotor 2.

Each device 3a and 3b is sensitive to the magnetic field lines directed mainly in an orthogonal direction to his surfaces or main faces, i.e. according field lines respectively oriented as shown with dotted lines in figure 2.

During operation, when the rotor 2 is instantaneously in the position shown in figure 1, the magnetic field in the zone of the sensors 3a, 3b is directed perpendicularly in radial way. In this condition the signal furnished by the sensor 3a has an intensity of maximum absolute value, while the signal furnished by the sensor 3b (sensitive to the tangential field) is substantially null. When the rotor goes over the position of figure 1, in the zone of the sensors 3a, 3b the intensity of the radial component of the field starts to decrease, while the intensity of the tangential component starts to increase. Correspondently, the intensity of the signal furnished by the sensor 3a decreases (in absolute value), while the intensity of the signal furnished by the sensor 3b increases. The intensity of the signal of the sensor 3a has a minimum absolute value when the rotor 2 is in the two positions orthogonal to that illustrated in figure 1, and in said conditions the absolute value of the signal of the sensor 3b is instead maximum.

Further the rotation of the rotor 2, the signals generated by the sensors 3a and 3b result isofrequential, periodic and offset by 90 degrees with respect to each other. Said signals are preferably the sine and cosine of the position angle of the rotor 2.

To the rotating element of Figure 1 is preferably associated a ring of ferromagnetic material 4, arranged in a stationary position and coaxial with the rotor 2, to which the support 100 is integrally fixed.

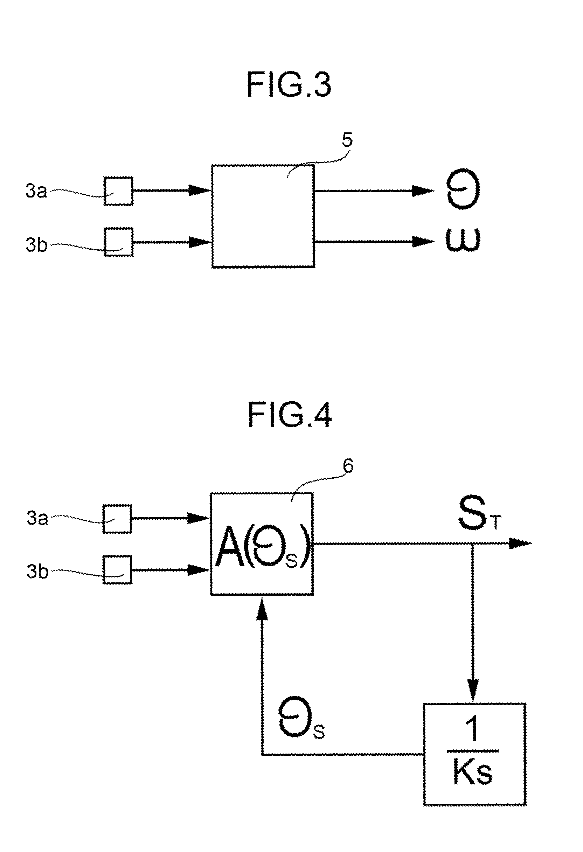

The sensors 3a, 3b are connected to an electronic processing unit, denoted 5 in Figure 3, which is arranged to process in a predetermined way the signals supplied by said sensors 3a, 3b and to generate signals or data representative of the position angle and of the angular speed of the rotor 2. The assembly composed of sensors 3a, 3b and said processing unit forms a sensing device, whose operation will be explained below.

The first step for calculating the position angle and the angular speed of the rotor 2 consists in obtaining from the sensors 3a, 3b the sinusoidal signals, as defined by the following formulae:

$$S = H \sin(\theta) = H \sin(\omega t)$$
$$C = H \cos(\theta) = H \cos(\omega t)$$

$$(1)$$

where $\theta$ represents the rotation angle of the rotor 2, $\omega$ its angular speed, t the time and H the strength of the magnetic field. The angle $\theta$ is obtained easily from the inverse functions of the sine or cosine.

The derivatives of the two signals are then calculated:

$$\dot{S} = \frac{dS}{dt} = \omega H \cos(\omega t)$$
$$\dot{C} = \frac{dC}{dt} = -\omega H \sin(\omega t)$$

$$(2)$$

The following matrix of angular rotation is then constructed:

$$A(\theta) = \begin{bmatrix} C & -S \\ S & C \end{bmatrix}$$

$$(3)$$

Said matrix is applied to the vector of the derived signals:

$$A(\theta)\begin{bmatrix} \dot{S} \\ \dot{C} \end{bmatrix} = \begin{bmatrix} C\dot{S} - S\dot{C} \\ S\dot{S} + C\dot{C} \end{bmatrix}$$

$$(4)$$

By substituting the expressions (1) and (2) in the matrix (4) the following is obtained:

$$A(\theta)\begin{bmatrix} \dot{S} \\ \dot{C} \end{bmatrix} = \begin{bmatrix} \omega H^2 \\ 0 \end{bmatrix}$$

$$(5)$$

The derivatives of the signals may be written discretely as follows:

$$\dot{S}_n = \frac{S_n - S_{n-1}}{T_C}$$
$$\dot{C}_n = \frac{C_n - C_{n-1}}{T_C}$$

$$(6)$$

with n = 0,1,... N

where $S_n$ and $C_n$ are values of the sine and cosine of the position angle of the rotor 2 acquired in a generic sampling instant, $S_{n-1}$ and $C_{n-1}$ are the values of the sine and cosine acquired in the previous sampling instant, and $T_c$ is the period of time between two consecutive samplings.

By substituting the expressions (6) in the matrix (4) and then equating the matrix (4) to the matrix (5), the following relation for the calculation of the angular speed of the rotor 2 is obtained from the first equation:

$$\omega = \frac{S_n C_{n-1} - C_n S_{n-1}}{T_C H^2} \qquad (7)$$

By changing the period of time between two consecutive samplings, the sensitivity of the system is changed. The strength of the magnetic field H must be standardized.

A variation of the method above described for calculating the angular speed of the rotor 2 is based on the following approach. The starting point is the assumption that the actual angle of rotation θ and the corresponding rotation speed ω cannot in reality be determined exactly because the measurements performed by the sensors 3a, 3b are subject to intrinsic measurement errors. For this reason, values for these parameters are estimated and a feedback loop system is then used to try to eliminate the estimation error between the estimated parameters and the actual parameters. The more the loop manages to reduce this error, the more the estimated parameters correspond to the actual parameters.

Figure 4 shows a feedback loop in which the signals S and C supplied by the sensors 3a, 3b are applied, in a block 6, to a matrix of estimated angular rotation $A(\theta_s)$ of the following type:

$$A(\theta_s) = \begin{bmatrix} \cos(\theta_s) & -\sin(\theta_s) \\ \sin(\theta_s) & \cos(\theta_s) \end{bmatrix} \qquad (8)$$

where $\theta_s$ is the estimated rotation angle, which is set so as to be equal to the product $\omega_s t$.

Said matrix (8) is applied to the vector of the detected signals:

$$\begin{bmatrix} S_T \\ C_T \end{bmatrix} = A(\theta_s) \begin{bmatrix} S \\ C \end{bmatrix} = \begin{bmatrix} H \sin((\omega - \omega_s)t) \\ H \cos((\omega - \omega_s)t) \end{bmatrix} \qquad (9)$$

where ω is the actual rotation speed and $\omega_s$ is the estimated rotation speed.

The second equation of the relation (9) is not used. From the first equation, since the processing unit 5, using a control mechanism, tends to bring $\omega_s$ to ω, it is possible to express:

$$S_T = H \sin((\omega - \omega_s)t) \approx H(\omega - \omega_s)t = H(\theta - \theta_s) \qquad (10)$$

where θ is the actual rotation angle.

The control mechanism sets:

$$S_T = \omega_s \qquad (11)$$

From the known frequency/time relations the following is obtained:

$$\omega_s = \frac{\theta_s}{t} = f\theta_s = \frac{\omega}{2\pi}\theta_s \qquad (12)$$

By setting $\omega = s$ and $\frac{1}{2\pi} = k$, where s is the Laplace variable, and combining the equations (11) and (12) the following is obtained:

$$S_T = sk\theta_s \qquad (13)$$

The above may be visualized in the diagram according to Figure 4 where $S_T$ which, depending on the relation (11) is equal to the estimated angular speed $\omega_s$, is multiplied by the factor $\frac{1}{ks}$ so as to obtain $\theta_s$, as defined by the equation (13).

By replacing in the equation (10) the expression of $\theta_s$ obtained from the equation (13) the following is obtained:

$$S_T = H\left(\theta - \frac{S_T}{ks}\right) \qquad (14)$$

whence:

$$S_T = \omega_s = \frac{ks\theta}{1 + \frac{ks}{H}} \qquad (15)$$

In relation to the equation (15) above, by changing the parameter k the sensitivity of the system is changed.

With reference to the diagram in Figure 4, it can be seen that the feedback branch includes an integrator (transfer function $\frac{1}{ks}$). In fact, the angular speed is, by definition, the temporal derivative of the rotation angle. In order to obtain the angular speed, not being possible to use directly a derivator since it would introduce an advance which cannot be known *a priori,* an integrator is used, said integrator, placed in the feedback branch, corresponding functionally to a derivator situated in the direct branch of the feedback loop. The feedback loop therefore tends to eliminate the angle estimation error and, correspondingly, in an indirect manner, in relation to the speed, owing to the integral relation which links the two parameters. By calculating the parameter $S_T$, the angular speed $\omega_s$ which corresponds to the actual speed $\omega$ filtered by integrator, is directly estimated.

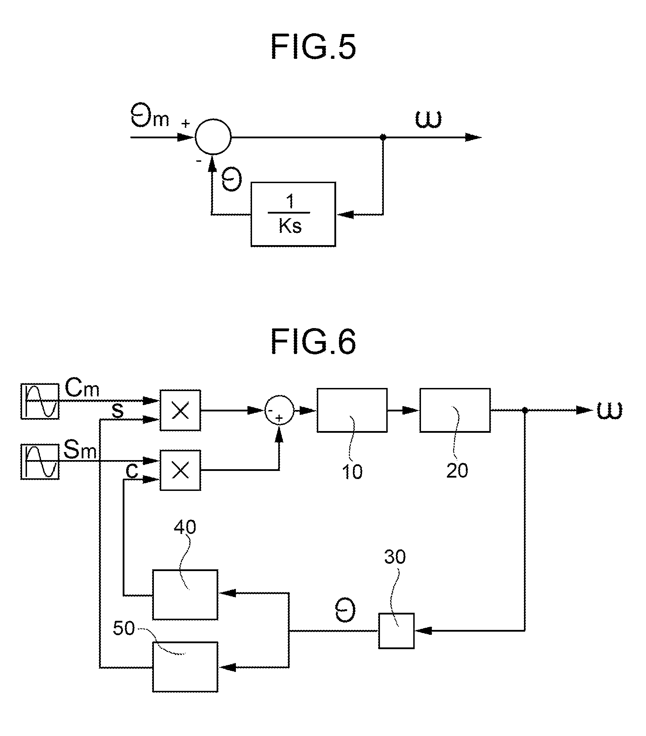

A further variation of the methods described above will now be described in connection with Figures 5 and 6. It is now assumed that the signals S and C supplied by the sensors 3a, 3b are generic functions.

Said signals S and C are compared with pairs of interpolation functions stored in an acquisition table so as to identify the interpolating functions which best approximate said signals S and C. A respective value of the rotation angle $\theta_m$ corresponds to each pair of interpolation functions; therefore, by means of the acquisition table, it is possible to associate to the measured signals S and C, in a unique manner, the value of the angle of rotation $\theta_m$ which corresponds to the pair of interpolating functions which best approximates these signals.

Said angle $\theta_m$ becomes the input of a closed loop system, as illustrated in Figure 5, which shows a control loop which tries to equalize the actual angle of rotation $\theta$ with the angle $\theta_m$. From the expression of the system transfer function the angular speed is obtained directly:

$$\omega = s\theta_m \frac{k}{(1+sk)} \qquad (16)$$

With respect to the equation (16) above, by changing the parameter k, the sensitivity of the system is changed.

If the signals S and C are not generic functions but are actually sine and cosine functions, it is possible to use directly said signals as shown in Figure 6, where the signals are indicated as $S_m$ and $C_m$. The block diagram shown in Figure 6 illustrates the application of the following relation:

$$\sin\theta_m \cos\theta - \cos\theta_m \sin\theta = \sin(\theta_m - \theta) \approx \theta_m - \theta \qquad (17)$$

in which $\sin\theta_m$ and $\cos\theta_m$ represent the signals $S_m$ and $C_m$, and $\sin\theta$ and $\cos\theta$ represent the signals S and C. The blocks 10, 20 and 30 indicate respectively a filter, a PI integrator and an ordinary integrator; the angle $\theta$ is obtained at the output of the block 30, the blocks 40 and 50 calculate the sine and cosine thereof, respectively. The angular speed is instead obtained at the output of the block 20.

Obviously, the principle of the invention remaining the same, the embodiments and the constructional details may be widely varied with respect to that described and illustrated above purely by way of a non-limiting example, without thereby departing from the scope of the invention as defined by the accompanying claims.

**Claims**

1. Device for sensing the angular position and/or angular speed of a rotating element (1), comprising:

   - a rotor (2) made of permanent magnetic material rotationally integral with said rotating element (1), the rotor (2) being magnetized transversely in a substantially uniform way and having at least one pair of magnetic poles of opposite polarity, which are equally spaced angularly;
   - at least two magnetic field sensors (3a, 3b) associated to the rotor (2) and arranged substantially in the same angular position; the arrangement being such that said sensors (3a, 3b) are arranged to supply respective signals or data from which the value of the position angle of the rotor (2) is inferable;
   - electronic processing means (5) arranged to process in a predetermined manner the signals supplied by said magnetic field sensors (3a, 3b) and to generate signals or data representative of the position and/or angular speed of the rotor (2).

2. Device for sensing the angular position and/or angular speed according to claim 1, in which a magnetic field sensor (3a) is oriented in a way such during operation it is mainly sensitive to the magnetic field generated by the rotor (2) in a radial direction, and the other magnetic field sensor (3b) is oriented in a way such that during the operation it is mainly sensitive to the magnetic field generated by the rotor (2) in tangential direction.

3. Device for sensing the angular position and/or angular speed according to claim 1 or 2, further comprising a single support (100) operatively stationary to which said sensors (3a, 3b) are fixed.

4. Device for sensing the angular position and/or angular speed according to any of the preceding claims, further comprising a ring of ferromagnetic material (4) which is arranged coaxially with the rotor (2), in a stationary position.

5. Device for sensing the angular position and/or angular speed according to any of the preceding claims, in which the sensors (3a, 3b) are placed with the respective barycentre placed in an angular field between 0° and 10°.

6. Device for sensing the angular position and/or angular speed according to any of the preceding claims, in which the electronic processing means (5) are arranged to generate signals or data representative of the angular speed of the rotor (2) according to the following relation:

$$\omega = \frac{S_n C_{n-1} - C_n S_{n-1}}{T_C H^2}$$

with n = 0,1,... N

where $\omega$ is the angular speed of the rotor (2), $S_n$ and $C_n$ are respectively the values of the sine and cosine of the position angle of the rotor (2) acquired in a generic sampling instant, $S_{n-1}$ and $C_{n-1}$ are respectively values of the sine and the cosine, of the position angle of the rotor acquired in the previous sampling instant, $T_c$ is the period of time between two consecutive samplings and H is the strength of the magnetic field produced by the rotor (2).

7. Device for sensing the angular position and/or angular speed according to any of the claims 1 to 5, in which the electronic processing means (5) are designed to generate signals or data representative of the angular speed of the rotor, according to the following relation:

$$S_T = \omega_s = \frac{ks\theta}{1 + \dfrac{ks}{H}}$$

in which:

$$S_T = sk\theta_s$$

where $\omega$ is the angular speed of the rotor (2), $\theta_s$ is the estimated position angle of the rotor (2), k is a constant, s is the Laplace variable and H is the strength of the magnetic field produced by the rotor (2).

8. Device for sensing the angular position and/or angular speed according to any of the claims 1 to 5, in which the electronic processing means (5) are designed to generate signals or data representative of the angular speed of the rotor (2) according to the following relation:

$$\omega = s\theta_m \frac{k}{(1 + sk)}$$

where $\omega$ is the angular speed of the rotor (2), $\theta_m$ is the position angle of the rotor (2) and k is a constant.

# FIG.1

# FIG.2

# FIG.3

# FIG.4

# FIG.5

# FIG.6